# EUROPEAN PATENT APPLICATION

(11) **EP 2 632 207 A1**
(43) Date of publication of application: **28.08.2013**
(21) Application number: 12184073.0
(22) Date of filing: 12.09.2012
(51) Int. Cl.: H04W 48/18, H04W 88/06

(54) **Multi-mode cellular terminal with RAT selection according data being related to foreground or background application**

(30) Priority: 24.02.2012 KR 20120019293
(71) Applicant: Pantech Co., Ltd., Seoul 121-792 (KR)
(72) Inventor: Kwag, Yun-Geun, 121-270 Seoul (KR); Kim, Kyung-Beom, 121-270 Seoul (KR); Han, Kun-Wook, 121-270 Seoul (KR)
(74) Representative: Jordan, Volker Otto Wilhelm

(57) **Abstract**

The application relates to wireless multi-mode communication terminals. Conventional LTE terminals may operate in one of the two modes at a time, for using a data communication service. In order to enable the use of high-quality packet switching (PS) service, the conventional LTE terminals may be designed to operate in the LTE mode if the LTE terminals can access both the LTE network and the WCDMA network. In the LTE standard, however, the radio resource control (RCC) state may not subdivided and defined, unlike the WCDMA standard. Furthermore, a procedure (e.g., user equipment (UE) initiated fast dormant according to the WCDMA standard) that enables terminals to release a radio resource control (RRC) connection may not be defined in the LTE standard. Due, at least in part, to these reasons, multi-mode terminals that support the LTE mode and the WCDMA mode may consume more power than single mode terminals that support the third-generation wireless communication service but not the fourth-generation wireless communication service. Furthermore, its voice call reception rate may be reduced in comparison to an existing WCDMA terminal, because it has, when operating in LTE mode, on receipt of a voice signal over the LTE network, to perform a series of procedures for accessing the WCDMA network. The problem is solved in that the LTE or the WCDMA mode is selected (305, 307, 309, 312, 314, 316) based on the presence of so-called "foreground data", which is data related to a foreground application. A foreground application is an application of a multi-mode terminal which performs multitasking that is currently active. Whether the application is active is determined by a user action detector which e.g. detects a that the display is touched (302).

## Description

### CROSS-REFERENCE TO RELATED APPLICATION

This application claims the benefit from and priority under 35 U.S.C. §119(a) of Korean Patent Application No. 10-2012-0019293, filed on February 24, 2012, the entire disclosure of which is incorporated herein by reference for all purposes.

### BACKGROUND

FIELD

The following description relates to a wireless communication technology, and more particularly, to a multi-mode terminal and method for controlling an operation mode thereof.

DISCUSSION OF THE BACKGROUND

A wireless communication system provides various kinds of communication services, such as sound service and data service. Due, at least in part, to the widespread proliferation of smart devices and their related services provided through the smart devices, the amount of data traffic in a wireless communication system may be increasing. Therefore, users may request or desire a data communication service that may be faster and more stable than a conventional third-generation mobile communication service, such as a service using a wideband code division multiple access (WCDMA) wireless communication system. A fourth-generation wireless communication service may provide a faster data communication service, which may support high-speed data transmission and reception at, for example, an upper downlink speed of 100 Mbps and an upper uplink speed of 50 Mbps. In an example, a wireless communication service using a long term evolution (LTE) wireless communication system may be provided to support the fourth generation wireless communication service.

Since the newly established fourth-generation wireless communication network (e.g., LTE network) and the existing wireless communication network (e.g., WCDMA network), which may already be nationally established, may be used together, a mobile communication terminal supporting LTE (hereinafter referred to as an LTE terminal) may be designed to support the existing third-generation mobile communication technology as well as LTE communication technology. Since the LTE network may not be nationally established and the voice over Internet protocol (VoIP) service may not yet be provided, a voice communication service may still be provided over a circuit switching (CS) network instead of the LTE network. Accordingly, the LTE terminals may be manufactured as a multi-mode terminal type that supports a fourth-generation communication mode to perform according to the fourth-generation standard (e.g., LTE standard) and an existing communication mode to perform according to the existing communication standard (e.g., WCDMA standard).

Conventional LTE terminals may operate in one of the two modes at a time, for using a data communication service. This may be, at least in part, because the multi-mode LTE terminals may be unable to simultaneously communicate with the third-generation communication system and the fourth-generation communication system. Instead, the multi-mode LTE terminals may communicate with one communication system at a time, according to the LTE standard. For example, the LTE terminals can selectively operate in the LTE mode where the LTE terminals access the LTE network for data communication, or the WCDMA mode in which the LTE terminals access the existing WCDMA network. However, LTE terminals may operate in the WCDMA mode for voice communication.

In order to enable the use of high-quality packet switching (PS) service, the conventional LTE terminals may be designed to operate in the LTE mode if the LTE terminals can access both the LTE network and the WCDMA network. In the LTE standard, however, the radio resource control (RCC) state may not subdivided and defmed, unlike the WCDMA standard. Furthermore, a procedure (e.g., user equipment (UE) initiated fast dormant according to the WCDMA standard) that enables terminals to release a radio resource control (RRC) connection may not be defined in the LTE standard. Due, at least in part, to these reasons, multi-mode terminals that support the LTE mode and the WCDMA mode may consume more power than single mode terminals that support the third-generation wireless communication service but not the fourth-generation wireless communication service.

The LTE terminals (i.e., multi-mode terminals) may operate in the WCDMA mode, for using a voice communication service. A WCDMA modem, which may be the existing communication modem that supports the WCDMA service, may be driven so as to use the existing CS network for performing voice communication with an LTE terminal. However, both of the modems may be unable to be simultaneously driven in the LTE terminals, and thus an LTE terminal that is operating in the LTE mode by driving an LTE modem may be unable to monitor a signal that is transferred over the CS network. Accordingly, an LTE terminal in the LTE mode may receive information on a voice signal over the LTE network that is the PS network to receive the voice signal. An LTE terminal that receives information on a voice signal over the LTE network may temporarily stop an LTE modem that is operating, and may drive a WCDMA modem to access the WCDMA network. In this way, to receive a voice signal, a multi-mode terminal in the LTE mode may stop the operation of an LTE modem and operate a WCDMA modem, thereby performing a series of procedures for accessing the WCDMA network. As a result, in the conventional LTE terminals, a voice call reception rate may be reduced in comparison to the existing WCDMA terminal.

### SUMMARY

Exemplary embodiments of the present invention provide a multi-mode terminal and method for controlling an operation mode thereof.

Additional features of the invention will be set forth in the description which follows, and in part will be apparent from the description, or may be learned by practice of the invention.

Exemplary embodiments of the present invention provide a method for operating a multi-mode terminal having a processor including receiving a data packet, determining whether the data packet includes foreground data, detecting radio resource control (RRC) state of the terminal, and selecting, using the processor, a first mode or a second mode based on the presence of the foreground data in the data packet and the RRC state of the terminal.

Exemplary embodiments of the present invention provide a multi-mode terminal including a receiver to receive a data packet, and a mode determiner to determine whether the data packet comprises foreground data, and to select a first mode or a second mode based on the presence of the foreground data in the data packet.

Exemplary embodiments of the present invention provide a method for operating a multi-mode terminal having a processor including receiving a data packet, determining whether the data packet includes foreground data, and selecting, using the processor, a first mode or a second mode based on the presence of the foreground data in the data packet, in which the second mode is selected if the data packet is determined to comprise the foreground data.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram illustrating a configuration of a multi-mode terminal according to an exemplary embodiment of the present invention.

FIG. 2 is a flowchart illustrating a method for controlling operation of a multi-mode terminal according to an exemplary embodiment of the present invention.

FIG. 3 is a block diagram illustrating a configuration of an apparatus to control an operation mode according to an exemplary embodiment of the present invention.

FIG. 4 is a flowchart illustrating a method for controlling operation of a multi-mode terminal according to an exemplary embodiment of the present invention.

FIG. 5 is a flowchart illustrating a method for controlling operation of a multi-mode terminal according to an exemplary embodiment of the present invention.

FIG. 6 is a flowchart illustrating a method for controlling operation of a multi-mode terminal according to an exemplary embodiment of the present invention.

FIG. 7 is a flowchart illustrating a method for controlling operation of a multi-mode terminal according to an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. It will be understood that for the purposes of this disclosure, "at least one of X, Y, and Z" can be construed as X only, Y only, Z only, or any combination of two or more items X, Y, and Z (e.g., XYZ, XZ, XYY, YZ, ZZ). Throughout the drawings and the detailed description, unless otherwise described, the same drawing reference numerals are understood to refer to the same elements, features, and structures. The relative size and depiction of these elements may be exaggerated for clarity.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

The below-described exemplary embodiments of the present invention may support communication based on two mobile communication modes, and may be applied to a multi-mode terminal that performs communication according to one of the two mobile communication modes. One of the two mobile communication modes may be a legacy mobile communication mode according to an existing mobile communication standard, and the other may be a new mobile communication mode according to a new mobile communication standard.

More particularly, the multi-mode terminal may perform data communication over a packet switching (PS) network according to the new mobile communication mode, and perform voice communication over a circuit switching (CS) network according to the legacy mobile communication mode. For example, the new mobile communication mode may be a communication mode according to a fourth-generation mobile communication standard, such as a long term evolution (LTE) or a WiMAX mobile communication standard. Further, the legacy mobile communication mode may be a communication mode according to a mobile communication standard that predates the fourth-generation mobile communication standard, such as a global system for mobile (GSM), a code division multiple access (CDMA), or a wideband code division multiple access (WCDMA) mobile communication standard. In the below-described exemplary embodiments, the new mobile communication mode will be described as an example of a communication mode according to the fourth-generation mobile communication standard, and the legacy mobile communication mode will be described as an example of a communication mode according to a mobile communication mode predating the fourth-generation mobile communication standard, but are not limited thereto.

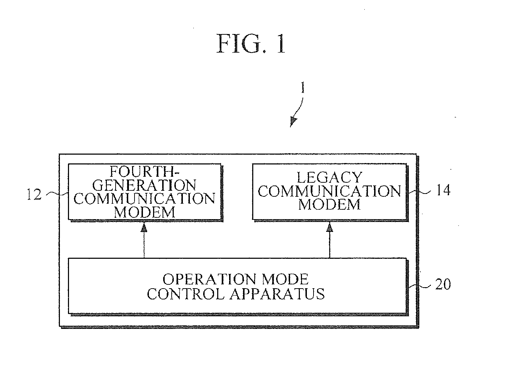

FIG. 1 is a block diagram illustrating a configuration of a multi-mode terminal according to an exemplary embodiment of the present invention.

Referring to FIG. 1, a multi-mode terminal 1 includes a fourth-generation mobile communication modem 12, a legacy mobile communication modem 12, and an operation mode control apparatus 20. Herein, the fourth-generation mobile communication modem 12 may be an apparatus that performs data communication over the PS network according to the fourth-generation mobile communication standard, the LTE mobile communication standard, or the WiMAX mobile communication standard. The legacy mobile communication modem 14 may be an apparatus that performs voice communication over the CS network according to the mobile communication standard predating the fourth-generation mobile communication standard, such as the existing second-generation or third-generation mobile communication standard (e.g., GSM, CDMA, or WCDMA).

Referring to FIG. 1, while multiple elements are illustrated as separate components, they are not limited thereto. The elements may be implemented as physically separate from each other or joined as one body. For example, the fourth-generation mobile communication modem 12 and the legacy mobile communication modem 14 may be physically implemented separately or integrated into one body. Moreover, the fourth-generation mobile communication modem 12 and the legacy mobile communication modem 14 may be implemented separately from an application apparatus (not shown) included in the multi-mode terminal 1 or integrated into one body. The operation mode control apparatus 20 may be implemented as one module including both the fourth-generation mobile communication modem 12 and the legacy mobile communication modem 14, or implemented as one module of another control apparatus (e.g., a control apparatus for an application apparatus of the multi-mode terminal 1) that is physically or logically separated from the fourth-generation mobile communication modem 12 and the legacy mobile communication modem 14.

The configuration of the multi-mode terminal 1 illustrated in FIG. 1 is exemplary in nature and may illustrate some elements that may be included in an exemplary configuration but not all. The multi-mode terminal 1 may additionally include other components to perform other operations. For example, the multi-mode terminal 1 may further include a wireless Internet (e.g., wireless local area network (WLAN) or the like) module, a global positioning system (GPS) module, a near field (e.g., Bluetooth® or the like) module, an input module (e.g., a microphone, a camera, a keypad, a touch pad and the like), an output module (e.g., a speaker, a display and the like), an application module (e.g., an operating system for a smart phone or the like), a memory, a sensing module (e.g., G-sensor, an accelerometer sensor and the like), and a power source.

The multi-mode terminal 1 may be a terminal that supports voice communication and data communication over a mobile communication network. More specifically, the multi-mode terminal 1 may be a terminal that simultaneously supports the fourth-generation mobile communication standard, such as the LTE standard or the WiMAX standard, and the existing second-generation or third-generation mobile communication standard, such as GSM, CDMA, or WCDMA. In the specification, terms such as LTE, WiMAX, WCDMA, CDMA, and GSM are abbreviations denoting mobile communication standards, however, they may also refer to a radio access tool (RAT), which may be a wireless communication technology used to access a mobile communication network.

The multi-mode terminal 1 may operate in an LTE mode (which may be an example of a fourth-generation communication mode) that may use LTE as a RAT according to the LTE standard, and may operate in a WCDMA mode (which may be an example of a legacy communication mode) that may use WCDMA as a RAT according to the WCDMA standard. However, the LTE mode and the WCDMA mode are selected examples, and the multi-mode terminal 1 may be a terminal that uses different kinds of RAT instead of LTE as the fourth-generation communication mode or WCDMA as the legacy communication mode. The multi-mode terminal 1 may operate in the legacy communication mode (i.e., use WCDMA as a RAT) but not in the fourth-generation communication mode to perform voice communication over the CS network, or operate in either of the fourth-generation communication mode or the legacy communication mode (i.e., LTE or WCDMA as a RAT) to perform data communication over the PS network.

A terminal may be referred to as a user equipment (UE), a wireless transmit/receive unit (WTRU), a mobile station (MS), an advanced mobile station (AMS), a mobile handset, or a mobile subscriber unit. Also, a base station (BS) may be called a node B, an eNode B, or an access point (AP).

The fourth-generation mobile communication modem 12 and the legacy mobile communication modem 14 denote respective communication apparatuses that may be installed in the multi-mode terminal 1 to communicate with a base station according to their respective communication standards. The fourth-generation mobile communication modem 12 may include a radio frequency (RF) module that may enable the multi-mode terminal 1 to transmit or receive a radio signal to or from a fourth-generation mobile communication network, and a fourth-generation communication processor that may perform a series of processes on a transmission or reception signal. The legacy mobile communication modem 14 may include a legacy RF module that may enable the multi-mode terminal 1 to transmit or receive a radio signal to or from a second-generation or third-generation mobile communication network, and a legacy communication processor that may perform a series of processes on a transmission or reception signal. In the specification, as long as each of the fourth-generation mobile communication modem 12 and the legacy mobile communication modem 14 is configured to perform communication according to a corresponding communication standard, then there may be limited restrictions on their detailed configurations.

An RRC state of each of the fourth-generation mobile communication modem 12 and the legacy mobile communication modem 14 may be at least divided into an idle state and a connected state, according to whether a radio resource bearer is established between the multi-mode terminal 1 and the base station. The idle state may refer to a state in which a channel for communication may not be allocated between the multi-mode terminal 1 and the base station. Further, the connected state may refer to a state in which the radio resource bearer is established, in which case at least one channel for communication may be established between the multi-mode terminal 1 and the base station.

A PS traffic state may denote that an RRC state of one of the fourth-generation mobile communication modem 12 and legacy mobile communication modem 14 is in a connected state. Further, the PS traffic state may more particularly, denote a state in which a radio resource bearer for data communication using the PS network instead of voice communication using the CS network has been established for the multi-mode terminal 1. The PS traffic state may include a case (e.g., LTE PS traffic state) in which the RRC state of the fourth-generation mobile communication modem 12 may be in the connected state for data communication, and a case (e.g., WCDMA PS traffic state) in which the RRC state of the legacy mobile communication modem 14 may be in the connected state.

Still referring to FIG. 1, the operation mode control apparatus 20 may select one of the fourth-generation mobile communication modem 12 and the legacy mobile communication modem 14 to be driven if the multi-mode terminal 1 performs a communication operation over a mobile communication network. In this case, the operation mode control apparatus 20 may select and drive the fourth-generation mobile communication modem 12 if the multi-mode terminal 1 may request a high-quality data communication service, and thus, the multi-mode terminal 1 may be controlled to be operated in the fourth-generation communication mode. However, the operation mode control apparatus 20 may select and drive the legacy mobile communication modem 14 if the multi-mode terminal 1 does not request a high-quality data communication service, and thus, the multi-mode terminal 1 may be controlled to be operated in the legacy mode. Hereinafter, an operation mode control method in the operation mode control apparatus 20 of the multi-mode terminal 1 will be described in more detail.

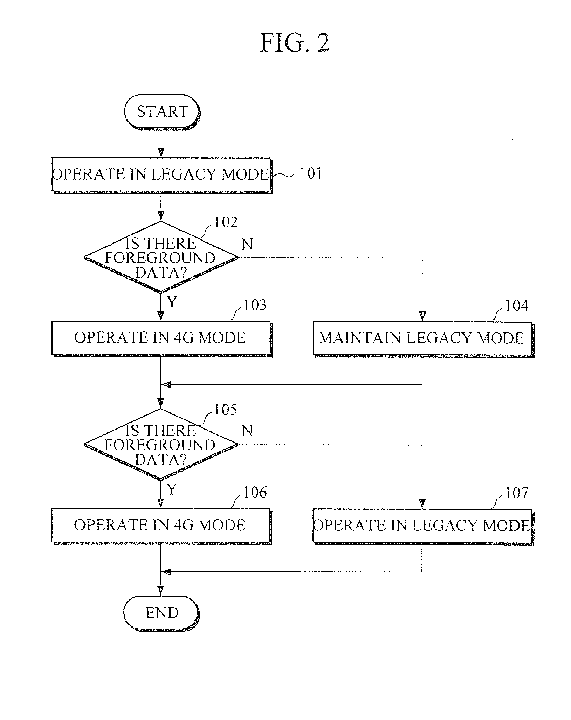

FIG. 2 is a flowchart illustrating a method for controlling operation of a multi-mode terminal according to an exemplary embodiment of the present invention.

Referring to FIG. 1 and FIG. 2, the operation mode control apparatus 20 may first control the multi-mode terminal 1 in the legacy mode. For example, in a standby state where the multi-mode terminal 1 may be booted or does not perform voice communication or data communication ( i.e., when there is no foreground data (which will be described below) to communicate), the operation mode control apparatus 20 may select to drive the legacy mobile communication modem 14. If the multi-mode terminal 1 normally operates in the legacy mode, the multi-mode terminal 1 may release an RRC connection according to a corresponding communication standard in a case where there is no data for a reference period of time, which may decrease the use of power. Moreover, if voice paging is received, a series of procedures for switching an operation mode from the fourth-generation communication mode to the legacy mode may not be requested for a response to the voice paging, which may increase a voice call reception rate.

The operation mode control apparatus 20 may determine whether there is foreground data to communicate in operation 102. Unlike background data that may be exchanged between the multi-mode terminal 1 and the base station over the PS network without the participation of a user, the foreground data may be data that is transmitted or received over the PS network with some participation from the user. For example, if the multi-mode terminal 1 is performing multitasking by simultaneously operating a plurality of applications, an interface to execute a currently activated application may be a foreground, and an interface to execute the other deactivated application may be a background. Therefore, data transmitted or received according to the execution of a foreground application, namely, the foreground data, may request high-quality data communication because a corresponding application may be displayed on a current screen and controlled by the user. In contrast, data transmitted or received according to the execution of a background application, namely, the background data, may request relatively low-quality data communication because a corresponding application may not be displayed on a current screen and/or not be controlled by the user. Therefore, if there is foreground data to communicate, the multi-mode terminal 1 may be generally regarded as requiring a high-quality data communication service. Various algorithms may be used to determine whether the multi-mode terminal 1 has foreground data to communicate, which will be described in more detail below.

If it is determined in operation 102 that there is foreground data to communicate, the operation mode control apparatus 20 may select and drive the fourth-generation mobile communication modem 12, which may control the multi-mode terminal 1 to operate in the fourth-generation communication mode or a 4G mode, in operation 103. In this case, the multi-mode terminal 4 may be located in an area that enables fourth-generation communication service. Although not shown, if the multi-mode terminal 1 is located in an area that cannot provide the fourth-generation communication service, the operation mode control apparatus 20 may maintain the legacy mode. However, if it is determined in operation 102 that there is no foreground data to communicate, the operation mode control apparatus 20 may maintain the existing legacy mode, in operation 104. In an exemplary embodiment of the present invention, a procedure in which the multi-mode terminal 1 switches an operation mode, for example, a procedure of switching the operation mode from the legacy mode to the 4G mode (e.g., operation 103) or a procedure of switching the operation mode from the 4G mode to the legacy mode (e.g., operation 107, which will be described below) conforms to a procedure for establishing and releasing a radio resource bearer that may be defined in a corresponding communication standard.

The operation mode control apparatus 20 determines whether there is foreground data to communicate in operation 105. This operation may be applied to a case in which the multi-mode terminal 1 operates in the legacy mode as the result of operation 104 and a case in which the multi-mode terminal 1 operates in the 4G mode as the result of operation 103. If it is determined in operation 105 that there is foreground data to communicate, the operation mode control apparatus 20 controls the multi-mode terminal 1 to operate in the 4G mode in operation 106. However, if it is determined in operation 105 that there is no foreground data to communicate, the operation mode control apparatus 20 controls the multi-mode terminal 1 to operate in the legacy mode in operation 107.

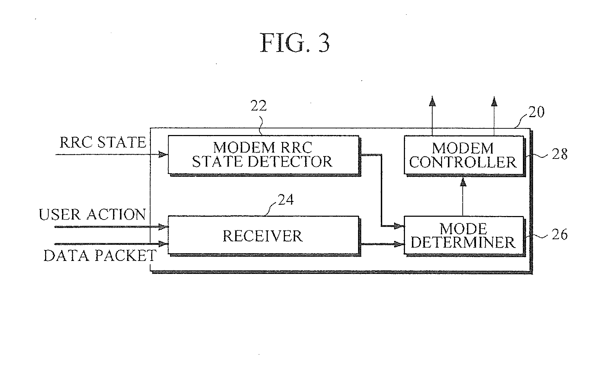

FIG. 3 is a block diagram illustrating a configuration of an apparatus to control an operation mode according to an exemplary embodiment of the present invention.

Referring to FIG. 3, the operation mode control apparatus 20 includes a modem RRC state detector 22, a receiver 24, a mode determiner 26, and a modem controller 28. As described above, the operation mode control apparatus 20 may be one module of a processor that configures the fourth-generation mobile communication modem 12 and the legacy mobile communication modem 14 of the multi-mode terminal 1 (see FIG. 1) and/or one module of another processor (e.g., an application processor of the multi-mode terminal 1).

The modem RRC state detector 22 may detect the RRC state of the multi-mode terminal 1, and more specifically, the RRC state of each of the fourth-generation mobile communication modem 12 and the legacy mobile communication modem 14 (see FIGS. 1) of the multi-mode terminal 1. The modem RRC state detector 22 may determine the RRC state by providing a query. For example, the modem RRC detector 22 may detect a state shift that may occur in an RRC layer of the multi-mode terminal 1 or, by providing a query to the RRC layer, may determine the RRC state of the multi-mode terminal 1. The modem RRC state detector 22 may transfer the determined RRC state information to the mode determiner 26. If a packet paging signal being received is detected through the RRC layer, the modem RRC state detector 22 may generate a data packet signal and transfer the data packet signal to the mode determiner 26. The data packet signal will be described in more detail below.

The RRC layer may control some or all layers associated with a connection between the multi-mode terminal 1 and the base station (a network side). That is, the multi-mode terminal 1 may request resources from the network side and receive resources allocated through the RRC layer, for communicating with the network. Releasing the allocated resources may be performed through the RRC layer. As described above, the RRC state may be divided into a connected state and an idle state. The connected state may denote a state in which a radio resource (i.e., a channel) is allocated between the multi-mode terminal 1 and the base station, and communication is performed. The idle state may denote a state in which the radio resource is not allocated between the multi-mode terminal 1 and the base station. The network side may not be aware of information of the multi-mode terminal 1 in the idle state. The multi-mode terminal 1 may monitor a paging signal from the base station and receive a PS call or a CS call.

The RRC layer may store a current RRC state. Therefore, the modem RRC state detector 22 may determine the current RRC state of the multi-mode terminal 1 based on the information stored in the RRC layer. The RRC layer may store the current RAT information after the selection of a RAT. Accordingly, the modem RRC state detector 22 may determine the current RAT of the multi-mode terminal 1 based on the information stored in the RRC layer. The RRC layer may provide a method that changes a current RAT and attempt registration to the changed RAT. The below-described modem controller 28 may change a RAT by using an operation provided from a corresponding RAC layer.

The receiver 24 may receive a user action signal and/or a data packet signal input from outside the operation mode control apparatus 20, and may transfer the received signal to the mode determiner 26.

A user action signal may be an example of a signal indicating that a user has performed an action on the multi-mode terminal 1. A scheme of generating the user action signal and a detailed operation of transferring the generated user action signal to the receiver 24 are not limited. For example, if a display-on event occurs, the application processor of the multi-mode terminal 1 may generate a user action signal based on the display-on event. To this end, the application processor may include a user action detector. The user action detector may generate a user action signal based on the detected display-on event, and transmit the user action signal to a modem processor. More specifically, the receiver 24 of the operation mode control apparatus 20 may receive the user action signal, through a certain interface layer, for example, a radio interface link (RIL) layer. The radio interface link (RIL) may include a modem interface that is provided from an Android® operating system, and may include an interface layer that is provided for communication between the application processor and the modem processor. The radio interface link (RIL) may transfer information through a remote procedure call (RPC).

The data packet signal may be an example of a signal, which may indicate that there is data to be transmitted from the multi-mode terminal 1 to the network side, or data to be received from network side. In exemplary embodiments of the present invention, a scheme of generating the data packet signal and a detailed operation of transferring the generated data packet signal to the receiver 24 are not limited. For example, if the multi-mode terminal 1 receiving a packet paging signal is detected through the modem RRC layer, the modem RRC state detector 22 may generate a data packet signal and transfer the data packet signal to the mode determiner 26. Further, a data packet that is generated in the application processor of the multi-mode terminal 1 may be transferred to the modem processor to be transmitted to the network side. If the data packet is detected, the modem processor may generate a data packet signal and transfer the data packet signal to the receiver 24. For the detection of the data packet, the modem processor may include a data packet detector (not shown). The data packet detector may be implemented as a separate operating unit that may be included in the modem processor or implemented as an operation of the receiver 24.

For example, if a data packet is generated in an application executed in the Android® operating system, the generated data packet may be transferred to a transmission control protocol/Internet protocol (TCP/IP) stack. If the data packet of the TCP/IP stack is transmitted to a communication modem, some or all data packets may be transmitted through an Rmnet layer. A ds_rmnet operation of a modem may capture a data packet and transfer the captured information (e.g., a data packet signal) to the data packet detector.

The mode determiner 26 may determine a communication mode in which the multi-mode terminal 1 may operate in based on information transferred from the modem RRC state detector 22 and/or the receiver 24. For example, if the mode determiner 26 receives a user action signal from the receiver 24 and a data packet signal from the receiver 24 or the modem RRC state detector 22, the mode determiner 26 may determine an operation mode as the fourth-generation communication mode. In an example, the user action signal and data packet signal inputted to the mode determiner 26 may denote a presence of foreground data to be transmitted or received. Further, if the user action signal is inputted but no data packet to be transmitted or received, or if the data packet signal is inputted but no user action of the multi-mode terminal 1 is inputted, the mode determiner 26 may determine the operation mode as the legacy communication mode. Further, if the foreground data is determined not to be present, the mode determiner 26 may determine the operation mode as the legacy communication mode. Also, if neither the user action signal nor the data packet signal is inputted, the mode determiner 26 may determine the mode as the legacy communication mode.

The modem controller 28 may control the operation of the fourth-generation mobile communication modem 12 and the legacy mobile communication modem14 (see FIG. 1) according to the result determined by the mode determiner 26. That is, the modem controller 28 may maintain the RAT of the multi-mode terminal 1 as-is or may change the RAT according to the result determined by the mode determiner 26. For example, in a case where the mode determiner 26 determines the operation mode as the fourth-generation communication mode, if the legacy mobile communication modem is operating, the modem controller 28 may stop the operation of the legacy mobile communication modem and drive the fourth-generation mobile communication modem (e.g., change RAT from WCDMA to LTE), or if the fourth-generation mobile communication modem is operating, the modem controller 28 may maintain the operation of the fourth-generation mobile communication modem as-is (e.g., maintain RAT as LTE as-is).

Further, in a case where the mode determiner 26 may determine the operation mode as the legacy communication mode, if the legacy mobile communication modem is operating, the modem controller 28 may maintain the operation of the legacy mobile communication modem as-is (e.g., maintain RAT as WCDMA as-is), or if the fourth-generation mobile communication modem is operating, the modem controller 28 may stop the operation of the fourth-generation mobile communication modem and drive the legacy mobile communication modem (e.g., change RAT from LTE to WCDMA).

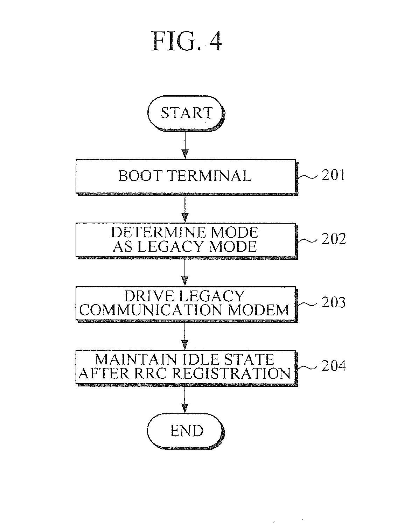

FIG. 4 is a flowchart illustrating a method for controlling operation of a multi-mode terminal according to an exemplary embodiment of the present invention. More specifically, FIG. 4 illustrates an exemplary case in which the multi-mode terminal 1 has been booted. An exemplary operation control method in the operation mode control apparatus 20 in response to the multi-mode terminal 1 being booted will be described below.

Referring to FIG. 3 and FIG. 4, first, a source voltage may be supplied to the multi-mode terminal 1, and booting of the multi-mode terminal 1 may be started in operation 201. At this point, the supply of the source voltage to the communication modems of the multi-mode terminal 1 may be provided. If the multi-mode terminal 1 has been booted, the multi-mode terminal 1 may operate in an operation mode (i.e., last RAT) used last before disconnection of the source voltage. Therefore, if the last RAT was LTE, the booted multi-mode terminal 1 may drive an LTE modem to operate in the LTE mode. However, if the last RAT was WCDMA, the booted multi-mode terminal 1 may drive a WCDMA modem to operate in the WCDMA mode.

Once the multi-mode terminal 1 is booted, the mode determiner 26 of the operation mode control apparatus 20 determines to operate in the legacy communication mode in operation 202. In an example, when multi-mode terminal 1 is booted, the legacy mode determiner 26 may simultaneously determine to operate in the legacy communication mode. That is, the mode determiner 26 may determine a RAT as WCDMA, and transfer the determined result to the modem controller 28. Accordingly, if the modem controller 28 operates in the WCDMA mode, the modem controller 28 may maintain a previous WCDMA RAT as-is, but if the modem controller 28 operates in the LTE mode, the modem controller 28 may switch the RAT from LTE to WCDMA in operation 203. That is, the modem controller 28 may maintain the driving of a legacy modem (e.g., WCDMA modem) or may start to drive the legacy modem.

If the legacy modem of the multi-mode terminal 1 (e.g., the WCDMA modem) is driven, the multi-mode terminal 1 may perform a WCDMA registration operation according to a normal procedure, and then if registration is completed, the multi-mode terminal 1 may control the RRC state to the idle state in operation 204. In exemplary embodiments of the present embodiment, a WCDMA or LTE registration operation may include an authentication/security operation and an operation that transmits terminal information to the network side. The multi-mode terminal 1 may end a registration operation and then maintain the RRC state as the idle state, whereupon the multi-mode terminal 1 may be capable of receiving normal service. The RRC idle state may indicate a state that may be capable of processing a paging signal without providing CS/PS service.

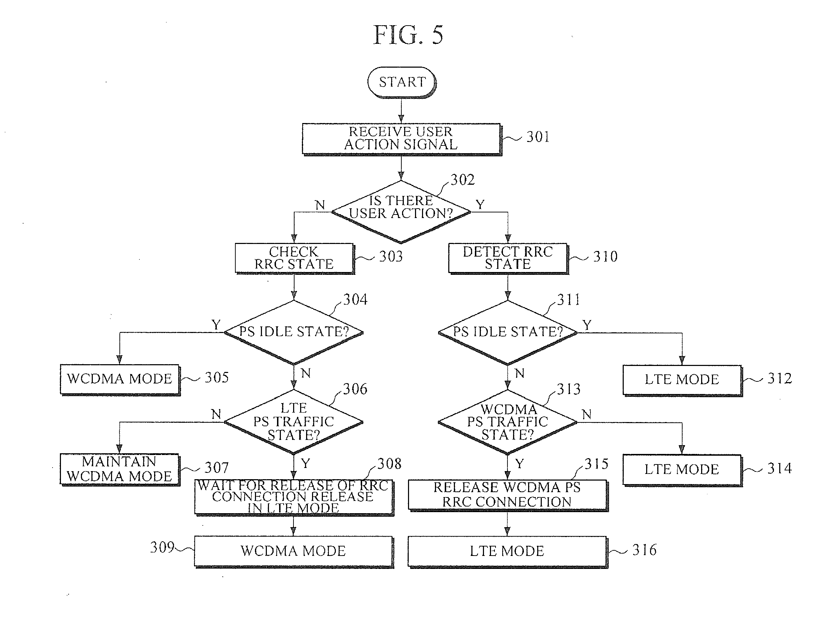

FIG. 5 is a flowchart illustrating a method for controlling operation of a multi-mode terminal according to an exemplary embodiment of the present invention. Further, FIG. 5 may illustrate an exemplary case in which a user action signal is received or is not received. Hereinafter, an example of an operation control method performed in the operation mode control apparatus 20 according to the user action signal will be described.

Referring to FIG. 3 and FIG. 5, the receiver 24 of the operation mode control apparatus 20 receives a user action signal or a user non-action signal in operation 301. Herein, the user action signal may include a signal indicating user action is detected on the multi-mode terminal 1, and the user non-action signal may include a signal indicating no user action is detected on the multi-mode terminal 1. The kinds of the signals are not limited thereto. As described above, in exemplary embodiments of the present embodiment, there are no restrictions on a method or a mechanism through which the multi-mode terminal 1 generates the user action signal or the user non-action signal and transfers the generated signal to the operation mode control apparatus 20. In exemplary embodiments of the present invention, however, the multi-mode terminal 1 may generate the user action signal or the user non-action signal according to a reference algorithm, and transfer the generated signal to the receiver 24 of the operation mode control apparatus 20.

The user action signal or the user non-action signal may be generated based on at least one of a display on/off event that may occur in the application processor of the multi-mode terminal 1, a touch event, and a result that may be obtained by checking whether an application with a data packet generated therein is the foreground application or the background application. Herein, the display on/off event may indicate that the turning on/off of a display, which generates an event signal, may generally be based on a fact that a touch screen is turned on if there is a user action. The touch event may refer to an event signal that is generated if the display is touched, and an occurrence of a touch event may be regarded as a user action on the touch screen. In addition, generation or receipt of a data packet in the foreground application may be regarded as a user action.

To this end, a user action detector may be installed in the application processor. The user action detector may detect at least one of a display on/off event signal, a touch event signal, and a foreground/background check result of an application to generate a user action/non-action signal. Further, the user action detector may transmit the at least one of the generated signals to the operation mode control apparatus 20. Further, according to exemplary embodiments of the present invention, the display on/off event signal, the touch event signal, or the foreground/background check result for an application may be used as the user action/non-action signal.

For example, a power manager service (e.g., PowerManagerService) in an Android® framework may broadcast an ACTION_SCREEN_ON signal if a HARDWARE LCD ON/OFF event (e.g., H/W LCD ON/OFF) occurs. That is, the Android® processor may generates an LCD ON/OFF event according to the turn-on/off of the display, and if the generated event is detected, the user action detector may determine whether there is a user action of the multi-mode terminal 1 to generate a user action/non-action signal, which may be transferred to the receiver 24 of the operation mode control apparatus 20 with the RPC by using the RIL.

If the receiver 24 transfers the received user action/non-action signal to the mode determiner 26, the mode determiner 26 may determine whether there is a user action in operation 302. The receiver 24 may store information based on the received user action/non-action signal, for example, display on/off state information, in a self-variable. If the receiver 24 receives a query on the display on/off state from the mode determiner 26, the receiver 24 may transfer the stored display on/off state information to the mode determiner 26.

If it is determined in operation 302 that there is no user action, the mode determiner 26 may determine that the operation mode of the multi-mode terminal 1 as the legacy mode (e.g., WCDMA mode). The mode determiner 26 may transfer the determined operation mode information to the modem controller 28. Thus, if the existing RAT is WCDMA, the mode determiner 26 may maintain a mode as WCDMA, but if the existing RAT is the fourth-generation communication mode (e.g., LTE mode), the mode determiner 26 may switch the current mode to WCDMA. The below-described operations 303 to 309 are an example of operation described herein.

If it is determined in operation 302 that there is no user action, the mode determiner 26 checks the RRC state of the multi-mode terminal 1 through the modem RRC state detector 22 in operation 303. The mode determiner 26 determines whether the RRC state of the multi-mode terminal 1 is a PS idle state with the checked result in operation 304, and if the RRC state is determined as the PS idle state, the mode determiner 26 determines the RAT of the multi-mode terminal 1 as WCDMA in operation 305. At this point, the mode determiner 26 may check the current RAT of the multi-mode terminal 1 through the modem RRC state detector 22. If the current RAT of the multi-mode terminal 1 is LTE, the mode determiner 26 may switch the current RAT to WCDMA, but if the current RAT is WCDMA, the mode determiner 26 maintains the current RAT as-is.

If the RRC state of the multi-mode terminal 1 is determined as not being the PS idle state in operation 304, the mode determiner 26 may check the current RAT of the multi-mode terminal 1 through the modem RRC state detector 22. Based on the checked result, the mode determiner 26 determines whether the multi-mode terminal 1 is in a LTE PS traffic state in operation 306. As described above, the LTE PS traffic state may refer to a case in which the current RAT of the multi-mode terminal 1 is LTE and the RRC state is the connected state. If it is determined in operation 306 that the multi-mode terminal 1 does not have the LTE PS traffic state, the mode determiner 26 maintains the existing WCDMA RAT, in operation 307. However, if it is determined in operation 306 that the multi-mode terminal 1 is in the LTE PS traffic state, the mode determiner 26 waits for the release of an RRC connection in the LTE mode in operation 308, and then switches the RAT to WCDMA, in operation 309. The LTE standard may disallow a terminal to autonomously initiate an RRC connection release procedure. According to the LTE standard, if a network side transmits an RRC connection release message to a terminal, an RRC layer of the terminal may release resources and then switch an RRC state to the idle state according to the received RRC connection release message.

If it is determined in operation 302 that there is a user action, the mode determiner 26 may additionally determines whether the RRC state of the multi-mode terminal 1 is in the idle state or the connected state. If the RRC state of the multi-mode terminal 1 is determined to be in the idle state, the mode determiner 26 may determine the operation mode of the multi-mode terminal 1 as the legacy mode (e.g., WCDMA mode). However, if the RRC state of the multi-mode terminal 1 is determined to be in the connected state, the mode determiner 26 may determine the operation mode of the multi-mode terminal 1 as the fourth-generation communication mode (e.g., LTE mode). The mode determiner 26 may transfer the determined operation mode information to the modem controller 28, which may control the RAT of the multi-mode terminal 1 according to the determined mode information. The below-described operations 310 to 316 are an example of this operation.

If it is determined in operation 302 that there is a user action, the mode determiner 26 may check the RRC state of the multi-mode terminal 1 through the modem RRC state detector 22 in operation 310. The mode determiner 26 may determine whether the RRC state of the multi-mode terminal 1 is the PS idle state with the checked result in operation 311. If the RRC state is determined as the PS idle state, the mode determiner 26 may determine the RAT of the multi-mode terminal 1 as the LTE mode in operation 312. Further, the mode determiner 26 may check or determine the current RAT of the multi-mode terminal 1 through the modem RRC state detector 22, and if the current RAT is WCDMA, the mode determiner 26 switches the current RAT to LTE, but if the current RAT of the multi-mode terminal 1 is LTE, the mode determiner 26 may maintain the current RAT as-is.

If the RRC state of the multi-mode terminal 1 is determined as not being the PS idle state in operation 312, the mode determiner 26 may check the RAT of the multi-mode terminal 1 through the modem RRC state detector 22. Based on the checked result, the mode determiner 26 determines whether the multi-mode terminal 1 is currently in a WCDMA PS traffic state, in operation 313. As described above, the WCDMA PS traffic state may refer to a case in which the current RAT of the multi-mode terminal 1 is WCDMA and the RRC state is the connected state. If it is determined in operation 313 that the multi-mode terminal 1 is not in the WCDMA PS traffic state, the mode determiner 26 maintains the existing LTE RAT, in operation 314. However, if it is determined in operation 313 that the multi-mode terminal 1 is in the WCDMA PS traffic state, the mode determiner releases the RRC connection of the WCDMA mode according to a procedure that may be defined in the WCDMA standard, in operation 315, and switches the RAT to LTE, in operation 316. According to the WCDMA standard, a terminal may release a WCDMA RRC connected state with a signaling connection release indicator (SCRI) of WCDMA.

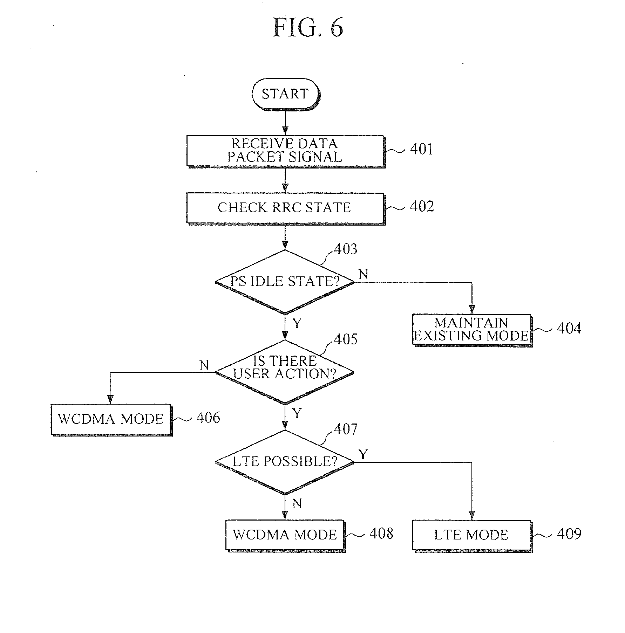

FIG. 6 is a flowchart illustrating a method for controlling operation of a multi-mode terminal according to an exemplary embodiment of the present invention. Further, FIG. 6 illustrates an exemplary case in which a data packet signal indicating presence of a data packet to be transmitted from the multi-mode terminal 1 to the network side is received. An example of an operation control method in the operation mode control apparatus 20 in response to the data packet signal being received will be described below.

Referring to FIG. 3 and FIG. 6, the receiver 24 of the operation mode control apparatus 20 receives a data packet signal in operation 401. As described above, the data packet signal may refer to a signal indicating that the multi-mode terminal 1 has transmitted a data packet to the network side or that the multi-mode terminal 1 has received a data packet from the network side. The flowchart of FIG. 6 may be more relevant to the former, but not limited thereto. The generation procedures of the data packet signal are not limited to the procedures illustrated in FIG. 6. For example, if a data packet to communicate is generated in the Android® application processor, a data packet signal may be inputted to the receiver 124 based on the generated data packet. The data packet generated in the Android® application processor may be transferred to the TCP/IP stack and to the communication modem through the Rmnet layer. Furthermore, the data packet signal may be generated based on the data packet that is transferred through the Rmnet layer, and inputted to the receiver 24.

If the data packet signal is received, the receiver 24 may transfer the data packet signal to the mode determiner 26. The mode determiner 26 may determine whether the RRC state of the multi-mode terminal 1 corresponds to the idle state or the connected state and, if the RRC state is determined to correspond to the connected state, the mode determiner 26 may additionally determine whether there is a user action to determine the RAT of the multi-mode terminal 1. For example, if the RRC state of the multi-mode terminal 1 corresponds to the connected state and there is a user action, the mode determiner 26 may determine the operation mode as the fourth-generation communication mode (e.g., LTE mode). However, if there is no user action, the mode determiner 26 may determine a mode as the legacy communication mode (e.g., WCDMA mode). Further, if there is no user action, the legacy communication mode may be determined regardless of the state of the RRC. The below-described operations 402 to 410 are an example of this operation.

If the data packet signal is inputted, the mode determiner 26 checks the RRC state though the modem RRC state detector 22 in operation 402. The mode determiner 26 determines whether the RRC state of the multi-mode terminal 1 is or corresponds to the PS idle state with the checked result in operation 403. If the RRC state is determined as not corresponding to the PS idle state, the mode determiner 26 maintains the RAT of the multi-mode terminal 1 as-is without switching the operation mode in operation 404. This may enable a data packet to be transmitted in the existing operation mode because the RRC state of the multi-mode terminal 1 may maintain the connected state by establishing the radio resource bearer with the network side independent of the WCDMA mode or the LTE mode.

If the RRC state of the multi-mode terminal 1 is determined to correspond to the PS idle state in operation 403, the mode determiner 26 determines whether there is a user action in operation 405. The operation 405 may be performed for determining whether a data packet to communicate is foreground data, which may be generated with active participation of the user, or simple background data, which may be generated irrespective of the user. The mode determiner 26 may determine whether there is a user action according to whether a user action signal is received through the receiver 24 or whether a user action is stored. If it is determined in operation 405 that there is no user action, the mode determiner 26 may determine the RAT of the multi-mode terminal 1 as the WCDMA mode in operation 406. According to exemplary embodiments of the present invention, since the multi-mode terminal 1 may defer to the WCDMA mode, the modem controller 28 may maintain the existing WCDMA mode if there is no foreground data to communicate.

Further, if it is determined in operation 405 that there is a user action, the mode determiner 26 determines the possibility or accessibility of LTE service in operation 407. Herein, the possibility of LTE service may refer to a location of the multi-mode terminal 1, which may enable access over the LTE network. By providing a query on the possibility of LTE service through the modem RRC state detector 22, the mode determiner 26 may determine whether a current area or location may be capable of providing the LTE service. If the current area is determined to be incapable of providing the LTE service in operation 407, the mode determiner 26 determines a mode as the WCDMA mode in operation 408. However, if the current area or location is determined to be capable of providing the LTE service in operation 407, the mode determiner 26 determines the mode as the LTE mode in operation 409.

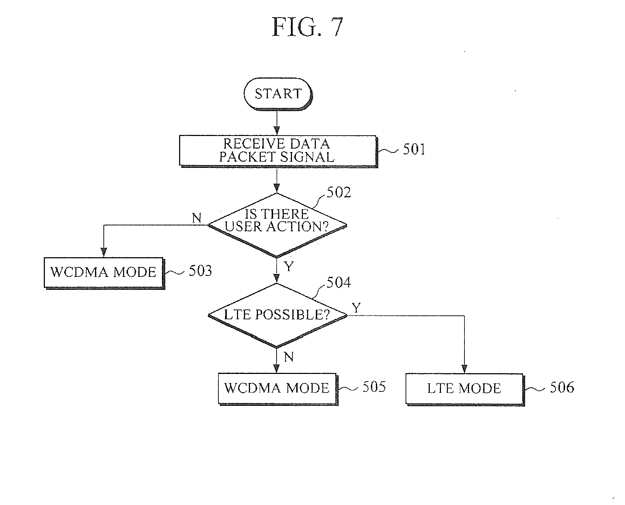

FIG. 7 is a flowchart illustrating a method for controlling operation of a multi-mode terminal according to an exemplary embodiment of the present invention. Further, FIG. 7 illustrates an exemplary case in which a data packet signal is received, which may indicate that there is a data packet to be received by the multi-mode terminal 1 from the network side. An example of an operation control method performed in the operation mode control apparatus 20 in response to the data packet signal being received will be described below.

Referring to FIG. 3 and FIG. 7, the receiver 24 of the operation mode control apparatus 20 receives a data packet signal in operation 501. As described above, the data packet signal may refer to a signal indicating that the multi-mode terminal 1 has transmitted a data packet to the network side or that the multi-mode terminal 1 has received a data packet from the network side. The flowchart of FIG. 7 may be more relevant to the latter. The generation procedures of the data packet signal are not limited to the procedures illustrated in FIG. 7. For example, if there is a data packet to be transmitted to the multi-mode terminal 1, by transmitting a packet paging signal, the network side may inform the multi-mode terminal 1 that there is a data packet to be transmitted. The modem RRC state detector 22 may detect the reception of the packet paging signal through the RRC layer, and transfer the data packet signal to the mode determiner 26. If the data packet signal is received, the mode determiner 26 may determine the RAT of the multi-mode terminal 1 in additional consideration of whether there is a user action. For example, if there is a user action, the mode determiner 26 may determine the operation mode as the fourth-generation communication mode (e.g., LTE mode), but if there is no user action, the mode determiner 26 may determine data as the background data to determine the operation mode as the legacy communication mode (e.g., WCDMA mode). The below-described operations 502 to 506 are an example of this operation.

If a data packet signal indicating that there is a data packet to receive is input, the mode determiner 26 may determine whether there is a user action in operation 502. This may determine whether a data packet to communicate is foreground data, which may be generated with active participation of the user, or simple background data, which may be generated irrespective of the user. The mode determiner 26 may determine the presence of the user action according to whether a user action signal is received through the receiver 24 or whether a user action is stored. If it is determined in operation 502 that there is no user action, the mode determiner 26 determines the RAT of the multi-mode terminal 1 as the WCDMA mode in operation 503. According to exemplary embodiments of the present invention, since the multi-mode terminal 1 may defer to the WCDMA mode, the modem controller 28 may maintain the existing WCDMA mode if there is no foreground data to communicate.

Further, if it is determined in operation 502 that there is a user action, the mode determiner 26 determines the possibility or accessibility of LTE service in operation 504. Herein, the possibility of LTE service may refer to a location of the multi-mode terminal 1, which may enable access over the LTE network. By providing a query on the possibility of LTE service through the modem RRC state detector 22, the mode determiner 26 may determine whether a current area or location may be capable of providing the LTE service. If the current area is determined to be incapable of providing the LTE service in operation 504, the mode determiner 26 determines a mode as the WCDMA mode in operation 505. However, if the current area or location is determined to be capable of providing the LTE service in operation 504, the mode determiner 26 determines the mode as the LTE mode in operation 506.

According to exemplary embodiments of the present invention, in a case where there is foreground data to communicate (i.e., a case where a high-quality data communication service may be requested), the multi-mode terminal may operate in the fourth-generation communication mode, but in other situations, the multi-mode terminal may operate in the legacy mode. Accordingly, if the multi-mode terminal is in the idle state or communicates background data, the multi-mode terminal can minimize battery power consumption by using the legacy mode. Furthermore, the multi-mode terminal may operate in the legacy mode as a default to reduce the likelihood of a drop in a voice call reception rate.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A method for operating a multi-mode terminal having a processor includes receiving a data packet, determining whether the data packet includes foreground data, and selecting, using the processor, a first mode or a second mode based on the presence of the foreground data in the data packet, in which the second mode is selected if the data packet is determined to comprise the foreground data. A multi-mode terminal includes a receiver to receive a data packet, and a mode determiner to determine whether the data packet comprises foreground data, and to select a first mode or a second mode based on the presence of the foreground data in the data packet.

## Claims

1. A method for operating a multi-mode terminal having a processor, comprising:
receiving a data packet;
determining whether the data packet comprises foreground data;
detecting a radio resource control (RRC) state of the terminal; and
selecting, using the processor, a first mode or a second mode based on the presence of the foreground data in the data packet and the RRC state of the terminal.

2. The method of claim 1, wherein the second mode is selected if the RRC state of the terminal is an idle state and the data packet is determined to comprise the foreground data;
or/and
wherein the first mode is selected if the RRC state of the terminal is in a connected state and the data packet is determined not to comprise the foreground data.

3. The method of claim 1 or 2, further comprising determining whether a packet switching (PS) traffic is received in the first mode or the second mode if the RRC state of the terminal is in a connected state and the data packet is determined to comprise the foreground data;
wherein preferably the second mode is selected if the PS traffic is not received in the first mode.

4. The method of claim 3, further comprising releasing the RRC connection and selecting the second mode if it is determined that PS traffic is received in the first mode.

5. The method of one of claims 1 to 4, further comprising determining whether a PS traffic is received in the first mode or the second mode if the RRC state of the terminal is in a connected state and the data packet is determined not to comprise the foreground data;
wherein preferably the first mode is selected if it is determined that the PS traffic is not received in the second mode.

6. The method of claim 5, further comprising releasing the RRC connection in the second mode and selecting the first mode if it is determined the PS traffic is received in the second mode.

7. The method of one of claims 1 to 6, wherein the first mode is a wideband code division multiple access (WCDMA) mode or UMTS mode and the second mode is a long term evolution (LTE) mode.

8. The method of one of claims 1 to 7, wherein the first mode is a legacy mode comprising a second-generation mode or/and a third-generation mode, and the second mode is a fourth-generation mode.

9. The method of one of claims 1 to 8, wherein the foreground data comprises at least one of a user action and data transmitted or received from an active application on the mobile terminal.

10. A multi-mode terminal, comprising:
a receiver to receive a data packet; and
a mode determiner to determine whether the data packet comprises foreground data, and to select a first mode or a second mode based on the presence of the foreground data in the data packet;
wherein preferably the terminal is adapted to initially operate in the first mode.

11. The terminal of claim 10, wherein the mode determiner is adapted to select the second mode if the data packet is determined to comprise the foreground data;
or/and
wherein the mode determiner is adapted to select the the first mode if the data packet is determined not to comprise the foreground data.

12. The terminal of claim 10 or 11, further comprising:
a modem radio resource control (RRC) state detector to detect RRC state of the terminal.

13. The terminal of one of claims 10 to 12, wherein the first mode is a wideband code division multiple access (WCDMA) mode or UMTS mode and the second mode is a long term evolution (LTE) mode.

14. The terminal of one of claims 10 to 13, wherein the first mode is a legacy mode comprising a second-generation mode or/and a third-generation mode, and the second mode is a fourth-generation mode.

15. A method, preferably according to one of claims 1 to 9, for operating a multi-mode terminal having a processor, comprising:
receiving a data packet;
determining whether the data packet comprises foreground data; and
selecting, using the processor, a first mode or a second mode based on the presence of the foreground data in the data packet,
wherein the second mode is selected if the data packet is determined to comprise the foreground data.
